# EUROPEAN PATENT APPLICATION

(11) **EP 2 120 397 A2**
(43) Date of publication of application: **18.11.2009**
(21) Application number: 09159582.7
(22) Date of filing: 06.05.2009
(51) Int. Cl.: H04L 12/24

(54) **Apparatus and method for modifying configuration settings of a network device from a mobile phone**

(30) Priority: 16.05.2008 US 54000 P; 22.04.2009 US 427804
(71) Applicant: Honeywell International Inc., Morristown, NJ 07962 (US)
(72) Inventor: Cheriyath, Rithesh, Morristown, New Jersey 07962-2245 (US); Lee, Jang, Morristown, New Jersey 07962-2245 (US); Khan, Mahmud, Morristown, New Jersey 07962-2245 (US); Vonruden, Phil, Morristown, New Jersey 07962-2245 (US)
(74) Representative: Buckley, Guy Julian

(57) **Abstract**

A system for modifying configuration settings of a network device from a mobile phone is provided. The system includes a mobile phone configured to communicate over a local area network, and a network device coupled to the local area network. The mobile phone is configured to access a configuration menu of the network device.

## Description

### CROSS-REFERENCE TO RELATED APPLICATIONS

This application claims priority to U.S. Provisional Application No. 61/054,000, "Method and System for Enabling/Disabling In-Flight Satellite Internet Channels," filed on May 16, 2008, which is hereby incorporated herein by reference.

This application is related to the following co-pending United States patent application which is hereby incorporated herein by reference:

United States patent application serial number 12/427,806 (attorney docket number H0019872-5435 entitled "Method and Apparatus for Efficient In-Flight Email Messaging") filed on even date herewith.

### BACKGROUND

Internet access during a flight on an aircraft can be very costly, because internet access from an aircraft during flight is generally billed based on the length of time in which access to the internet service is granted. Once a session granting internet access to a user is initiated, charges begin accruing. Charges continue to accrue until the user shuts down the session, regardless of whether the bandwidth granted for the session is actually being used by the user. For example, the user may only access local information or the user may sit idle during certain periods of the session. During these periods of idle network traffic from the user, charges are continuing to accrue.

The high cost of in-flight internet access is most noticeable for users of handheld devices such as a Blackberry® device. These users typically only require a small amount of internet bandwidth, and the bandwidth is only used for a fraction of the session during which access is granted. These users, however, are still typically charged based the length of time for their session, regardless of whether they are actually using the internet access granted.

### SUMMARY

A system for modifying configuration settings of a network device from a mobile phone is provided. The system includes a mobile phone configured to communicate over a local area network, and a network device coupled to the local area network. The mobile phone is configured to access a configuration menu of the network device.

### DRAWINGS

Understanding that the drawings depict only exemplary embodiments of the present invention and are not therefore to be considered limiting in scope, the exemplary embodiments will be described with additional specificity and detail through the use of the accompanying drawings, in which:

Figure 1 is a diagram of one embodiment of a system for routing packets from an electronic device to the internet.

Figure 2 is a flow diagram of one embodiment of a method for routing packets from an electronic device to the internet.

Figure 3 is a diagram of one embodiment of a system for viewing and modifying configuration settings of a network device from a mobile phone.

Figure 4 is a flow diagram of one embodiment of a method for viewing and modifying configuration settings of a network device from a mobile phone.

In accordance with common practice, the various described features are not drawn to scale but are drawn to emphasize specific features relevant to the exemplary embodiments of the present invention.

### DETAILED DESCRIPTION

The present disclosure is directed towards a method and system for modifying configuration settings of a network device, such as a router. Here, a mobile phone comprising is used to modify the configuration settings of the network device. The mobile phone is a Wi-Fi capable phone and is configured to access a telnet interface on the network device and send commands to the network device through the telnet interface to update the configuration of the network device.

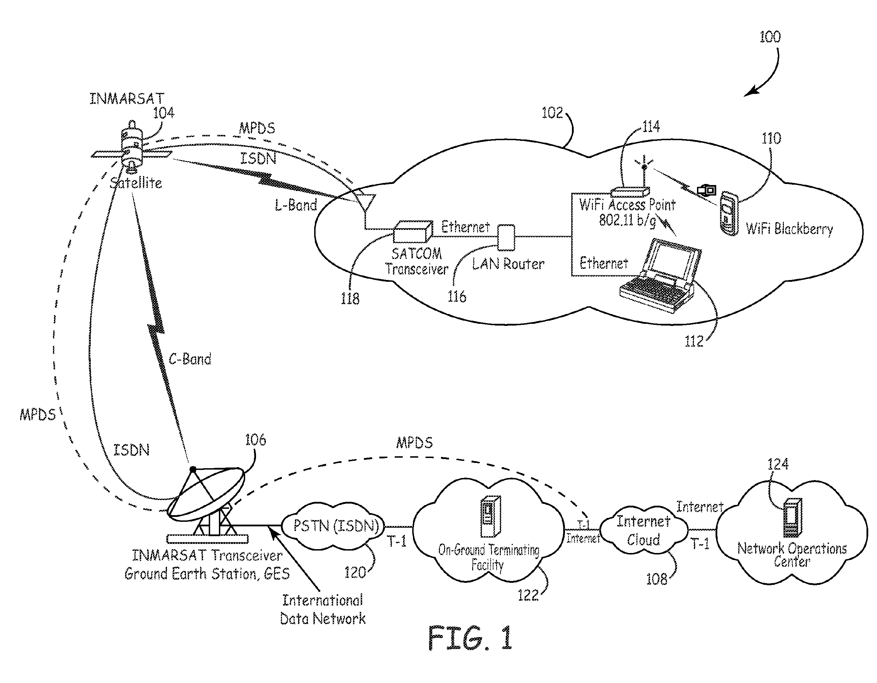

Figure 1 illustrates one example of a system 100 for routing information based on the type of information. In the embodiment shown in Figure 1, system 100 illustrates a mobile network 102 coupled through a satellite 104 and a ground earth station 106 to the internet 108. In the embodiment illustrated in Figure 1, the satellite 104 and ground earth station 106 are part of the INMARSAT system. In other embodiments, satellite 104 and ground earth station 106 are part of other satellite based systems. Mobile network 102 is implemented on a vehicle (not shown) such as an aircraft. Mobile network 102 enables users in the vehicle to access the internet 108.

Mobile network 102 is a local area network (LAN) using the TCP/IP communication protocol and can include one or more portable or non-portable electronic devices coupled together with a router, hub, switch or other switching device. In the embodiment illustrated in Figure 1, mobile network 102 comprises a first electronic device 110, a second electronic device 112, a wireless access point 114, a router 116, and a satellite transceiver 118. In the embodiments described herein, first electronic device 110, second electronic device 112, mobile network 102, the INMARSAT system, and the internet 108 transfer information using the Internet Protocol (IP). Information transmitted using the IP is transferred in data structures known as packets. Thus, the information transferred between devices and networks is herein referred to as packets.

First electronic device 110 is configured as a device that communicates all IP packets through one or more network operations centers 124. Network operations center 124 acts as the interface between first electronic device 110 and the internet 108, email service, and/or other electronic devices. For example, in one embodiment, first electronic device 110 is a Blackberry® device. A Blackberry® device is a device that uses software developed by Research in Motion (RIM) to send and receive data from network operations center 124. For example, in one embodiment, first electronic device 110 is a BlackBerry® 8820 Smartphone. The BlackBerry® 8820 Smartphone is a dual-mode handset, combining EDGE/GPRS/GSM cellular and Wi-Fi connectivity for data access and voice support through unlicensed mobile access (UMA) for fixed-mobile convergence (FMC) service offering from various wireless carriers around the world. The BlackBerry® 8820 smart-phone supports the 802.11 a/b/g Wi-Fi standards to enable data access over Wi-Fi connections, as well as through public hotspots and wireless home networks.

To send and receive information from network operations center 124, first electronic device 110 initiates an IP tunnel to network operations center 124. All packets sent from first electronic device 110 are initially sent to network operations center 124. Network operations center 124 then routes the packets to the appropriate location. For example, if the packets contain email information, the packets are routed to the appropriate email server, which may be located within network operations center 124. As another example, packets containing general internet information are forwarded from network operations center 124 toward their appropriate destination in the internet 108.

Second electronic device 112 is a device enabling general internet access. General internet access includes internet browsing that enables direct access to substantially all portions of the internet enabled by the internet access provider. In other words, packets from second electronic device 112 do not need to travel through network operations center 124 in their route to the destination, the packets may be directly routed to their destination.

First and second electronic devices 110, 112 communicate with router 116 using the IP. In one embodiment, router 116 is a local area network (LAN) router. In the embodiment shown in Figure 1, first electronic device 110 is a wireless device that communicates with router 116 through wireless access point 114. Thus, packets are sent wirelessly between wireless access point 114 and first electronic device 110, and wireless access point 114 communicates the packets through Ethernet cables to router 116. In other embodiments, wireless access point 114 is integrated into router 116. In one embodiment, wireless access point 114 uses Wi-Fi protocols for wireless transmissions with first electronic device 110. In this embodiment, second electronic device 112 is coupled to router 116 via an Ethernet cable, however, in other embodiments, second electronic device 112 is wirelessly communicatively coupled to router 116 via access point 114.

A plurality of internet access services are provided to connect mobile network 102 to the internet 108. In the embodiment shown in Figure 1, a first internet access service is an Internet Services Digital Network (ISDN) service. The ISDN service is an on-demand circuit mode connection which provides a user access to a dedicated bandwidth to the internet. In other words, the user is granted access to a defined amount of bandwidth (e.g. 64 kbps).
Once established, the ISDN connection may be shared with other users connected to mobile network 102. The ISDN service fees are based on the length of time for which the user(s) maintain the ISDN circuit as open or active, regardless of whether the ISDN circuit link bandwidth is actually being used. In one embodiment, the IDS service provides connection to one or more of the ISDN circuit channels that are dedicated to the vehicle from which the ISDN service is being provided.

A second internet access service is the mobile packet data service (MPDS). The MPDS provides a user access to an always available Point-to-Point Protocol (PPP), Transport Control Protocol (TCP)/Internet Protocol (IP) based communication link that is shared between multiple mobile networks. In other words, multiple users on different mobile networks (and/or different vehicles) may be connected to the internet using the same MPDS communication link and sharing the same bandwidth. The MPDS internet access is charged based only on the amount of data transferred to/from a device to which the access is granted, regardless of the length of time that a user of the device may access the link.

In the embodiment shown in Figure 1, the internet access services are provided through the INMARSAT system. The INMARSAT system is a satellite based connection from a mobile network to a ground based network. The INMARSAT system in Figure 1 comprises satellite 104 and ground earth station 106. Router 116 routes packets from first and second electronic devices 110, 112 through either the first internet access service or the second internet access service of INMARSAT system. When a packet is received at router 116, router 116 determines which of the internet access services the packet belongs to and sends the packet through the INMARSAT system over the selected internet access service.

For example, in one embodiment, the INMARSAT satellite system provides a particular aeronautical data communication services set, for the full range of commercial and business and general aviation class of aircraft, called the Swift64 High Speed Data (HSD) services. The ISDN service provided by the INMARSAT system is an on-demand 64Kbps Euro ISDN circuit mode service. The MPDS provided by the INMARSAT system is a shared 64Kbps Mobile Packet Data Services (MPDS) service connection.

Packets are transferred between mobile network 102 and the INMARSAT system with transceiver 118. Although the INMARSAT system is described in this embodiment, in other embodiments other satellite networks can be used. Transceiver 118 transmits and receives packets to/from the INMARSAT system via an antenna. Transceiver 118 sends information over the appropriate internet access service of the INMARSAT system to the internet. In one embodiment, transmissions between transceiver 118 and satellite 104 occur over the L-Band of frequencies. In the upstream direction (from mobile network 102 to the internet 108) router 116 determines which channel of the INMARSAT system the packet is to be sent through. Router 116 then forwards the packet to transceiver 118, which transmits the packet through the INMARSAT system on the appropriate channel. A routing table within router 116 determines the type of INMARSAT internet access service over which the packet is to be sent. Router 116 then forwards the packet to transceiver 118, which transmits the packet through the INMARSAT system on the appropriate service channel.

In the upstream path of the INMARSAT system, satellite 104 receives packets from transceiver 118 and forwards the packets to ground earth station 106. In one embodiment, transmissions between satellite 104 and ground earth station 106 occur on the C-Band of frequencies. Ground earth station 106 then sends the packets to the internet 108. Through the INMARSAT system, packets on both the ISDN service and MPDS travel through the same devices (satellite 104 and ground earth station 106); however, they travel on different service channels of the INMARSAT system. Between ground earth station 106 and the internet 108, however, packets on the ISDN internet access travel through different devices than packets on the MPDS. For MPDS service, ground earth station 106 is coupled directly to the internet 108. For ISDN service, packets travel from transceiver 106 through the international data network, over a public switched telephone network (PSTN) 120, and to an on ground terminal 122 (such as the Honeywell On-Ground high speed data (HSD) terminating facility). On-ground terminal 122 then connects the packets to the internet 108. Once each packet reaches the internet 108, the packet is routed through the internet 108 toward its destination.

In the downstream path (from the internet 108 to mobile network 102) packets are similarly routed through either the ISDN internet access service or the MPDS internet access service. Packets on the ISDN service are sent through ground terminal 122 and PSTN 120 to ground earth station 106. Packets on the MPDS are sent directly from the internet 108 to ground earth station 106. Ground earth station 106 then sends all packets received to satellite 104 on their respective service channels. Packets having a destination of a device connected using the ISDN service are sent on the appropriate channel or channels allocated to the ISDN service in the INMARSAT system. Likewise, packets having a destination of a device connected using the MPDS are sent on the service channel of the INMARSAT system allocated to the MPDS. Accordingly, packets are received at satellite 104 from ground earth station 106 and are forwarded to transceiver 118. Transceiver 118 sends the packets to router 116 and router 116 routes the packets either directly to or through wireless access point 114 to their destination device (first or second electronic device 110, 112).

As mentioned above, in this embodiment first electronic device 110 is configured as a device that communicates all packets through one or more network operations centers 124. Here, all packets from first electronic device 110 are sent to and received from network operations center 124 which is coupled to the internet 108. Thus, all packets sent from first electronic device 110 are sent through the INMARSAT system through the internet 108 and to network operations center 124.

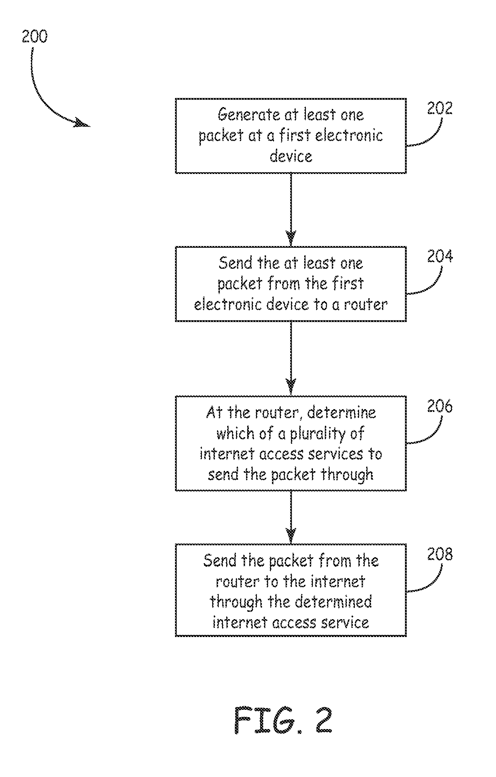

Referring now to Figure 2, one embodiment of a method 200 of routing packets between the internet and a plurality of electronic devices is provided. Method 200 illustrates an upstream communication flow from first electronic device 110 to network operations center 124. Downstream communications, from network operations center 124 to first electronic device 110, occur in substantially the opposite manner.

The upstream communication originates at first electronic device 110. A user of first electronic device 110 causes first electronic device 110 to generate packets of information for network operations center 124 (block 202). The packets of information may contain, for example, information relating to an email that is being sent by the user. The packets are sent from first electronic device 110 to router 116 (block 204). In this embodiment, wireless node 114 is coupled between router 116 and first electronic device 110 to enable wireless transmission for first electronic device 110. Thus, to send packets to router 116, packets are received wirelessly at wireless node 114, and wireless node 114 forwards the packet to router 116. Router 116 has the option to send any packets received through either the MPDS internet access service or the ISDN internet access service.

Once router 116 has received the packets from wireless access point 114, router 116 determines which internet access service to send the packets through (block 206). In one embodiment, router 116 determines which internet service access to send a packet through based on the type of information that is contained within the packet. Information of a first type is routed through a first internet service and information of a second type is routed through a second internet service. For example, packets containing information from a device configured as a device that communicates all packets through one or more network operations centers are sent through the MPDS service and packets containing information from a device configured as a general internet access device are sent through the ISDN service.

In one embodiment, router 116 determines which packets are packets from a device configured as a device that communicates all packets through one or more network operations centers based on a destination of the packets. Packets from such a device are initially sent to one of a plurality of known locations (network operation centers) corresponding to the device. In this embodiment, packets from first electronic device 110 are sent to network operations center 124.

As an example, all packets sent using a Blackberry® system are sent to a Blackberry® enterprise server (sometimes referred to as the network operating center) before being forwarded on to other locations. Router 116, therefore, determines whether a packet is sent using a Blackberry® system by determining whether the packet has an initial destination of a Blackberry® enterprise server (BES) or a Blackberry® Internet server (BIS) (network operations center). If the packet has an initial destination of a BES or a BIS the packet is routed over the MPDS internet access service. Router 116 recognizes that a packet has an initial destination of a BES or a BIS based on the destination IP address of the packet. If the destination IP address for the packet is a BES or a BIS, the router 116 sends the packet over the channel of the INMARSAT system allocated to the MPDS.

In one embodiment, router 116 also determines whether packets are sent through the ISDN internet access based on whether the packets have an initial destination of a BES or a BIS. Namely, in one embodiment, if a packet does not have an initial destination of a BES or a BIS, the packet was not sent using a Blackberry® system and is routed through the ISDN internet access service.

Once router 116 determines which internet access service to send packets over, router 116 sends the packets to transceiver 118 for transmission through the INMARSAT system and to internet 108 (block 208). In this way, packets from first electronic device 110 using a Blackberry® system are routed through the MPDS internet access service and packets from second electronic device 112 using a system other than the Blackberry® system are routed through the ISDN internet access service. Thus, in this embodiment packets are also routed based on the type of device from which the packets are sent. Packets from a device configured as a device that communicates all packets through one or more network operations centers are sent over the MPDS and packets from a device configured as a general internet device are sent over the ISDN service.

Since router 116 dynamically determines which service each packet is to be sent through, router 116 enables two separate devices to be connected to the internet 108 concurrently through a single router 116 while having the packets from each device sent through distinct internet access services.

Router 116 determines the internet access service dynamically, such that each packet or group of packets is determined individually. In one embodiment, the criteria used by router 116 to determine which internet access service a packet is sent through is set up in advance of establishing the network for router 116. For example, in one embodiment a routing table within router 116 is set such that information having a first destination is sent over a first channel of the INMARSAT system and all other information is sent over other channels of the INMARSAT system. The routing table is explicit such that all packets of the first type are sent over the first internet access service and all packets of the second type are sent over the second internet access service. This enables the users the option to use their Laptop PCs to connect to and browse the Internet via the higher speed circuit mode ISDN connection, while simultaneously enabling users of first mobile device 110 to receive their information via the lower cost, shared MPDS link.

In another embodiment, packets comprising information related to voice over IP (VoIP) are routed through a different internet access service than packets containing other information. VoIP typically works well with a steady bandwidth. Thus, in one embodiment, packets containing VoIP information are sent by router 116 over an internet access service that provides the VoIP service with a dedicated bandwidth and packets containing other information are sent by router 116 over another internet access service. Router 116 determines which packets contain VoIP based on a destination of packets that contain VoIP information. For example, in one embodiment, all packets sent using a certain VoIP service (e.g. Vonage) are sent to a particular VoIP server for that service. Thus, router 116 determines which packets are VoIP packets based on whether the packets have a destination address of the VoIP server. In one embodiment, first electronic device 110 is configured as a VoIP mobile phone. Thus, all packets from first electronic device 110 are sent over the internet access service assigned for the VoIP packets.

All or some portions of the method 200 described above can be implemented in software instructions tangibly embodied on a computer readable medium and executed by a processing unit such as a processing unit within router 116. For example, in one embodiment, software instructions to implement all or some portions of method 200 are implemented as code on a memory within router 116. Such computer readable media can be any available media that can be accessed by a general purpose or special purpose computer or processor, or any programmable logic device. Suitable computer readable media may include storage or memory media such as magnetic or optical media, e.g., DVD or CD-ROM, volatile or non-volatile media such as RAM (e.g., SDRAM, DDR SDRAM, RDRAM, SRAM, etc.), ROM, EEPROM, flash memory, etc.

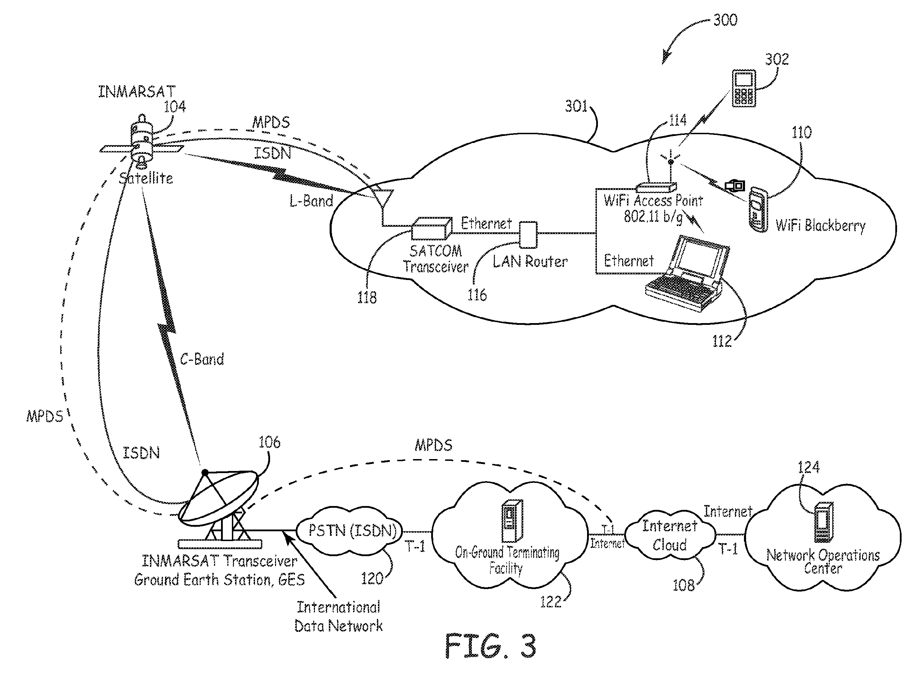

Referring now to Figure 3, another example of a system 300 for routing information is depicted, including a mobile network 301. Mobile network 301 includes a mobile phone 302 having Wi-Fi capability. In one embodiment, mobile phone 302 is a BlackBerry® 8820 Smartphone. The BlackBerry® 8820 Smartphone is a dual-mode handset, combining EDGE/GPRS/GSM cellular and Wi-Fi connectivity for data access and voice support through unlicensed mobile access (UMA) for fixed-mobile convergence (FMC) service offering from various wireless carriers around the world. The BlackBerry® 8820 smart-phone supports the 802.11 a/b/g Wi-Fi standards to enable data access over Wi-Fi connections, as well as through public hotspots and wireless home networks. The other components of system 300 are the same in function and construction as components of system 100 as described above.

Router 116 comprises configuration settings that are used to modify, for example, port settings for the router, filter settings for the router, or enable/disable internet access service connections through the router. When an internet access service is in the disabled setting in router 116, an internet connection is not allowed through router 116 for that service. For example, if first mobile phone 302 or any of the other network devices on mobile network 301 attempts to establish an ISDN connection through router 116 while router 116 has the ISDN connection disabled, the connection attempt by mobile phone 302 is denied by router 116 and no connection is established. In contrast, if the ISDN service connection is enabled, attempts by mobile phone 302 or any of the other network devices on mobile network 301 to establish an ISDN connection through router 116 are granted by router 116 and a connection is established. Internet access service connections, such as ISDN and MPDS, may be disabled to, for example, to reduce unintended connections resulting in unintended charges for a user of a mobile device.

In one embodiment, one or more of the internet access services are initially set as disabled in router 116. When a user of first and/or second mobile devices 110, 112 or mobile phone 302 desires to use an internet access service, at least one of the internet access services is enabled in router 116. To enable an internet access service, the configuration settings of router 116 are modified. The configuration settings are modified by accessing a configuration menu of router 116 via a configuration interface.

In one embodiment, the configuration interface is web-based. Router 116, therefore, has an internal web server that hosts the configuration interface at a defined IP address. In another embodiment, router 116 includes a telnet configuration interface in addition to the web-based configuration interface. To use the telnet interface, a device uses a command line interface using the telnet protocol to communicate configuration requests and changes to router 116. Router 116 communicates configuration status and modification acknowledgement back to the device using the telnet protocol. In other embodiments, the configuration interface of router 116 uses the secure shell (SSH) protocol or the simple network management protocol (SNMP).

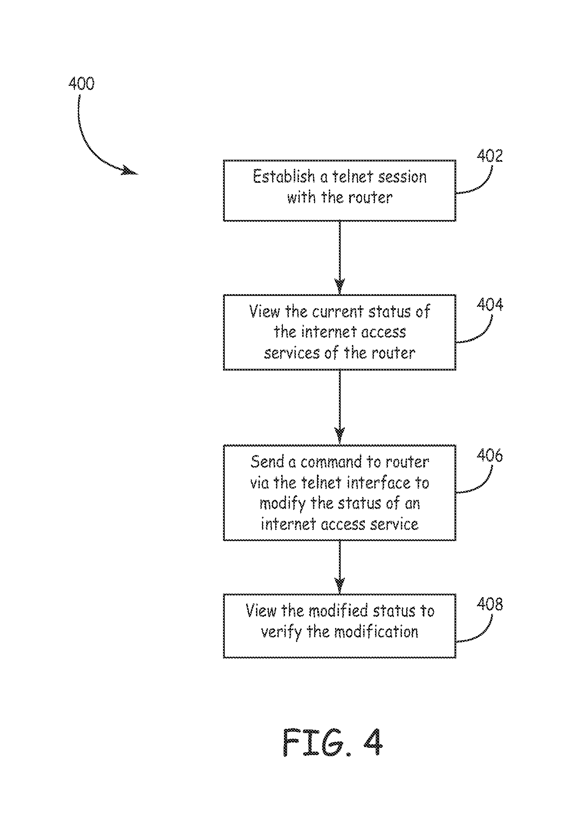

Figure 4 illustrates one embodiment of a method 400 for viewing and modifying configuration settings of a network device from mobile phone 302 over mobile network 301. To view and/or modify the configuration settings from mobile phone 302, mobile phone 302 first accesses the configuration menu of router 116. In the embodiment described herein, the configuration menu is accessed through the telnet configuration interface of router 116.

To access the configuration menu through the telnet interface, mobile phone 302 establishes a telnet session with router 116 (block 402). In this embodiment, communications between mobile phone 302 and router 116 are via access point 114. As mentioned above, the telnet interface for router 116 is in a command line format. Thus, commands to access, view, or modify settings of the configuration menu are sent from mobile phone 302 to router 116 in a command line format. Accordingly, in one embodiment, commands are input into mobile phone 302 by a user on a command line. In another embodiment, software stored on a memory of mobile phone 302 is used to make the command line interface more "user friendly". The software may, for example, convert buttons on a graphical user interface (GUI) to command line commands for the telnet interface of mobile phone 302.

Once a telnet session is established, mobile phone 302 logs in to the configuration menu of router 116 and views the current settings of the internet access services through the telnet interface (block 404). To modify a status of the internet access services in router 116, mobile phone 302 sends a command to the telnet interface of router 116 (block 406). Router 116 then modifies the internet access service status based on the command. For example, when mobile network 301 is used on an aircraft and a user of electronic device 112 would like to access the internet using an ISDN connection, a user of mobile phone 302 sends a command through the telnet interface of router 116 to set the status of the ISDN service to "enabled". Electronic device 112 then establishes the desired ISDN connection. Mobile phone 302 can also be used to verify that the status has been modified by a user viewing the current status of the ISDN and MPDS service interfaces, which should be set to "enabled" (block 408) in order for the services to be available for accessing the Internet or email messaging. In other embodiments, mobile phone 302 logs in to configuration menu to view and/or change other settings of router 116.

In one embodiment, the internet access service is enabled through router 116 separately for each individual electronic device. Thus, when it is desired that electronic device 112 establish an ISDN connection, mobile phone 302 sends a command to the telnet interface of router 116 to enable ISDN service specifically for electronic device 112. Router 116 then enables ISDN service for router 116, and maintains ISDN service as disabled for other electronic devices not previously enabled. When use of electronic device 112 is completed with the ISDN connection, mobile phone 302 sends a command to the telnet interface of router 116 to disable the ISDN service for electronic device 112. Router 116 then disables the ISDN service for electronic device 112, while maintaining the current status for all other electronic devices having internet access service through router 116.

Although as described above, mobile phone 302 sends commands to enable and disable the ISDN service through router 116, in other embodiments, mobile phone 302 enables other internet access services such as MPDS through router 116. Additionally, in other embodiments, mobile phone 302 can access the configuration menu of router 116 through a SNMP interface or a SSH interface. Finally, in one embodiment, mobile phone 302 accesses the configuration menu through a web-based interface by using a mobile web browser. Here, a web server in router 116 hosts a web interface configured for a mobile phone. Thus, mobile phone 302 uses a web browser operating thereon to access the web interface of router 116.

In one embodiment, the default status for router 116 is for the MPDS service to be enabled and the ISDN service to be disabled. As mentioned above, both internet access services can be modified by mobile phone 302.

In other embodiments, other network devices can be accessed by mobile phone 302, for example, to modify the configuration settings of the other network devices. In one embodiment, when mobile network 301 is on an aircraft, mobile phone 302 is configured to access a cabin management system coupled to mobile network 301. The cabin management system controls the aircraft functions affecting the passenger cabin of the aircraft. For example, the cabin management system controls the heating and cooling system, lighting, as well as other features within the passenger cabin. In this embodiment, therefore, mobile phone 302 is configured to access a configuration menu on a device controlling the cabin management system. Settings for the cabin management system can then be updated from mobile phone 302. Additionally, in yet another embodiment, mobile phone 302 is configured to update configuration settings on an entertainment system within the passenger cabin of an aircraft.

All or some portions of the methods described with respect to Figures 3 and 4 can be implemented in software instructions tangibly embodied on a computer readable medium and executed by a processing unit such as a processing unit within mobile phone 302. For example, in one embodiment, software instructions to implement all or some portions of the methods above are implemented as code on a memory within mobile phone 302. Such computer readable media can be any available media that can be accessed by a general purpose or special purpose computer or processor, or any programmable logic device. Suitable computer readable media may include storage or memory media such as magnetic or optical media, e.g., DVD or CD-ROM, volatile or non-volatile media such as RAM (e.g., SDRAM, DDR SDRAM, RDRAM, SRAM, etc.), ROM, EEPROM, flash memory, etc.

Although specific embodiments have been illustrated and described herein, it will be appreciated by those of ordinary skill in the art that any arrangement, which is calculated to achieve the same purpose, may be substituted for the specific embodiment shown. This disclosure is intended to cover any adaptations or variations of the inventions herein. Therefore, it is manifestly intended that the inventions herein be limited only by the claims and the equivalents thereof.

## Claims

1. A system (100) for modifying configuration settings of a network device (116) from a mobile phone (302), the system comprising:
a mobile phone (302) configured to communicate over a local area network (102);
a network device (116) coupled to the local area network (102);
wherein the mobile phone (302) is configured to access a configuration menu of the network device (116).

2. The system of claim 1, wherein the mobile phone (302) is configured to establish a telnet session with the network device (116) to access the configuration menu.

3. The system of claim 1, wherein the network device (116) is a router and wherein the mobile phone (302) is configured to enable an internet access service connection through the router (116), the internet access service connection enabling a portable electronic device (110, 112) to connect to the internet (108).

4. The system of claim 3, wherein the mobile phone (302) is configured to enable an ISDN connection for the portable electronic device (110, 112).

5. The system of claim 3, wherein the internet access service connection is enabled individually for the portable electronic device (110, 112).

6. A method (400) for modifying configuration settings of a network device (116) from a mobile phone (302), the method comprising:
from the mobile phone (302), accessing a configuration menu of a network device (116);
from the mobile phone (302), sending a command to the network device (116) to modify a configuration setting of the network device (116).

7. The method of claim 6, further comprising:
establishing a telnet session with the network device (116) to access the configuration menu of the network device (116).

8. The method of claim 6, wherein the network device (116) is a router and wherein the method further comprises:
sending a command from the mobile phone (302) to enable an internet access service connection through the router (116), the internet access service connection enabling a portable electronic device (110, 112) to connect to the internet (108).

9. The method of claim 8, wherein sending a command further comprises:
sending a command to enable an ISDN connection for the portable electronic device (110, 112).

10. The system of claim 8, wherein the internet access service connection is enabled individually for the portable electronic device (110, 112).
